# DEMANDE DE BREVET EUROPEEN

(11) **EP 3 370 219 A1**
(43) Date de publication de la demande: **05.09.2018**
(21) Numéro de dépôt: 18290011.8
(22) Date de dépôt: 19.02.2018
(51) Int. Cl.: G09B 9/00

(54) **PROCÉDÉ ET DISPOSITIF DE PRÉDICTION DE SOLUTIONS D'ATTAQUE ET DE DÉFENSE OPTIMALES DANS UN SCÉNARIO DE CONFLIT MILITAIRE**

(30) Priorité: 03.03.2017 FR 1700216
(71) Demandeur: MBDA France, 92350 Le Plessis-Robinson (FR)
(72) Inventeur: Fruit, Ronan, 92350 Le Plessis Robinson (FR); Vigouroux, David, 92350 Le Plessis Robinson (FR); LE Menec, Stéphane, 92350 Le Plessis Robinson (FR); Touchard, Charlotte, 92350 Le Plessis Robinson (FR); Kotenkoff, Alexandre, 92350 Le Plessis Robinson (FR); Formoso, Mathias, 92350 Le Plessis Robinson (FR)
(74) Mandataire: Gevers & Orès

(57) **Abrégé**

- Procédé et dispositif de prédiction de solutions d'attaque et de défense optimales dans un scénario de conflit militaire.
- Le dispositif de prédiction (1) comporte un ensemble d'entrée de données (2) pour entrer dans ledit dispositif (1), à la fois des données de l'attaquant relatives au moins à des modèles d'attaque, et des données du défenseur relatives au moins à une zone à défendre et à des moyens de défense disponibles, une unité de modélisation (4) pour générer un arbre de jeu évalué à partir de données entrées, dans le cadre de la théorie des jeux, une unité de résolution (6) pour définir un équilibre de jeu dans le cadre de la théorie des jeux, un équilibre définissant un couple de stratégie attaquant et de stratégie défenseur, une unité d'interprétation (7) pour déterminer, à partir de l'équilibre de jeu, une solution d'attaque optimale, ainsi qu'une solution de défense optimale la mieux adaptée à cette solution d'attaque optimale, et une unité de transmission d'informations (9) pour transmettre ces informations.

## Description

La présente invention concerne un procédé et un dispositif de prédiction de solutions d'attaque et de défense optimales dans un scénario de conflit militaire.

La présente invention s'applique au domaine militaire, et plus particulièrement bien que non exclusivement dans des situations où interviennent des systèmes de commandement et de coordination (« Command & Control (C2) » en anglais) qui gèrent, notamment, une allocation d'armes à des menaces. Dans le domaine militaire, la défense d'une zone donnée face à une offensive ennemie a pour objet d'allouer au mieux les ressources disponibles pour traiter les menaces en maximisant l'espérance de survie des points stratégiques défendus. En fonction des menaces, le système C2 détermine une solution d'engagement en tenant compte de critères opérationnels et techniques, notamment dans le cadre d'un système d'armes anti-aériens.

On sait que les systèmes d'armes anti-aériens sont constitués de capteurs, de lanceurs, et d'un centre de commandement opérationnel de type C2, dans lequel des opérateurs peuvent interagir avec le système et le superviser. Le centre de commandement opérationnel réalise une prédiction de trajectoires des attaquants, et utilise cette prédiction pour planifier la défense des objectifs potentiels des assaillants. Il cherche à trouver la meilleure défense possible pour le système face à un scénario d'attaque.

La prédiction des trajectoires des attaquants est rendue particulièrement complexe, en raison de trois facteurs :
- une forte incertitude affecte le comportement ultérieur de l'attaquant, et plus on se projette loin dans le futur, plus ce comportement réel est inconnu ;
- la plupart des attaquants (avions de chasse, missiles,...) présentent des capacités de manoeuvres importantes et peuvent donc changer rapidement de trajectoire (changement de cap, d'altitude,...) ;
- les trajectoires d'attaque, et en particulier les manoeuvres terminales pour rallier les objectifs, sont choisies pour mettre en défaut le système de défense, et sont donc difficiles à prédire par le centre de commandement opérationnel.

Les informations disponibles pour prédire les trajectoires proviennent d'une part de capteurs, notamment des radars, qui fournissent la trajectoire passée des attaquants avec des incertitudes sur les mesures, et d'autre part de la connaissance que le système et l'opérateur ont du type d'assaillant et des missions d'attaque qui peuvent être rencontrées.

La présente invention cherche à prédire une solution de défense mise en oeuvre par le défenseur pour se protéger au mieux de l'attaque et/ou, en se plaçant du côté de l'attaquant, une solution d'attaque optimale mise en oeuvre par l'attaquant.

La présente invention concerne plus particulièrement un procédé de prédiction d'une solution d'attaque optimale et d'une solution de défense optimale correspondante, dans un scénario de conflit militaire (au moins potentiel) entre un attaquant et un défenseur.

Selon l'invention, ledit procédé de prédiction comprend :
- une étape d'entrée de données, mise en oeuvre par un ensemble d'entrée de données, consistant à entrer, au moins initialement avant la mise en oeuvre du procédé, à la fois des données de l'attaquant relatives au moins à des modèles d'attaque, et des données du défenseur relatives au moins à une zone à défendre et à des moyens de défense disponibles ;
- une étape de modélisation de scénario, mise en oeuvre par une unité de modélisation, consistant à générer un arbre de jeu évalué à partir desdites données entrées dans le cadre de la théorie des jeux ;
- une étape de résolution, mise en oeuvre par une unité de résolution, consistant à définir un équilibre de jeu dans le cadre de la théorie des jeux, un équilibre définissant un couple de stratégie attaquant et de stratégie défenseur ;
- une étape d'interprétation, mise en oeuvre par une unité d'interprétation, consistant à déterminer, à partir de l'équilibre de jeu, une solution d'attaque optimale et une solution de défense optimale, la mieux adaptée à cette solution d'attaque optimale ; et
- une étape de transmission d'informations, mise en oeuvre par une unité de transmission d'informations, consistant à transmettre à un opérateur ou un système utilisateur, au moins ladite solution d'attaque optimale et ladite solution de défense optimale.

Le procédé conforme à l'invention permet ainsi de prédire des solutions optimales permettant notamment de définir, si on se place du côté du défenseur, une solution de défense optimale, et si on se place du côté de l'attaquant, une solution d'attaque optimale.

La prédiction de ces solutions (d'attaque et de défense) optimales dans le scénario de conflit se base sur la résolution d'un problème de théorie des jeux, comme précisé ci-dessous. La théorie des jeux permet d'analyser les situations dans lesquelles l'action optimale pour un agent dépend des anticipations qu'il forme sur la décision d'un autre agent. Ces deux agents sont l'attaquant et le défenseur dans le cadre de la présente invention.

Dans la théorie des jeux, un équilibre du jeu, notamment un équilibre dit de Nash, est une situation dans un jeu où aucun joueur n'a intérêt à changer de stratégie. Dans cette situation, l'ensemble des choix faits par plusieurs joueurs, connaissant leurs stratégies réciproques, est devenu stable en raison du fait qu'aucun ne peut modifier seul sa stratégie sans affaiblir sa position personnelle.

De façon avantageuse, les données de l'attaquant comportent au moins certaines des données suivantes :
- des modèles de procédures d'attaque, par exemple des trajectoires d'attaque ;
- des types de menaces et des caractéristiques associées ;
- au moins une position détectée d'apparition d'une menace ;
- au moins une position supposée d'apparition d'une menace ; et
- des préférences de l'attaquant.

En outre, avantageusement, les données du défenseur comportent au moins certaines des données suivantes :
- des missions possibles ;
- des données de moyens de détection ;
- des caractéristiques de moyens de détection ;
- des positions de cibles potentielles dans la zone à défendre ;
- des capacités de défense de la zone à défendre ; et
- des préférences du défenseur.

Concernant les données de l'attaquant et les données du défenseur, elle peuvent être des données connues et certaines, ou bien des données supposées, qui peuvent ne pas être complètement exactes, notamment en fonction de qui entre l'attaquant ou le défenseur réalise la prédiction. Ainsi, si on utilise le procédé de prédiction pour planifier une attaque, on connaît exactement en tant qu'attaquant les données et les paramètres de l'attaquant, mais les données du défenseur dont on dispose sont incertaines. Inversement, si on utilise le procédé de prédiction pour planifier une défense, on connaît exactement en tant que défenseur les données et les paramètres du défenseur. En revanche, les données de l'attaquant ne sont pas ou peu accessibles. Ces données sont en effet des hypothèses, des avis d'experts, des éléments provenant du renseignement militaire,... Les données comprennent donc des croyances présumées de la partie adverse, présumées par l'utilisateur de l'invention.

Dans un mode de réalisation, en particulier dans le cas de la protection d'un site lors d'une attaque aérienne, l'étape d'entrée de données consiste également à entrer, lors de la mise en oeuvre du procédé, des données courantes au moins de l'attaquant, détectées par exemple pour un ou plusieurs radars.

Par ailleurs, avantageusement, l'étape de modélisation comporte :
- une première sous-étape consistant à générer un ensemble de stratégies possibles à l'aide de certaines des données entrées ;
- une deuxième sous-étape consistant à générer un arbre de jeu dans le cadre de la théorie des jeux, à partir dudit ensemble de stratégies ;
- une troisième sous-étape consistant à évaluer ledit arbre de jeu, à l'aide de données de certaines des données entrées.

De préférence, la troisième sous-étape consiste, à partir de couples de stratégies, à évaluer au moins un couple de stratégie attaquant et de stratégie défenseur, et à attribuer une valeur à l'attaquant et une valeur au défenseur.

En outre, de façon avantageuse, l'étape de résolution comprend :
- une première sous-étape consistant à élaguer l'arbre de jeu reçu, à partir de données relatives à des menaces, de manière à former un arbre de jeu réduit ; et
- une seconde sous-étape consistant à déterminer l'équilibre de jeu, à partir de cet arbre de jeu réduit, pour en déduire un couple de stratégie attaquant et de stratégie défenseur.

De préférence, la première sous-étape utilise également des données courantes détectées, entrées lors de la mise en oeuvre du procédé, pour élaguer l'arbre de jeu reçu.

Par ailleurs, avantageusement, l'étape d'interprétation comprend :
- une première sous-étape consistant à interpréter la solution d'attaque optimale ; et
- une deuxième sous-étape consistant à interpréter la solution de défense optimale la mieux adaptée à cette solution de d'attaque optimale permettant de définir des règles d'engagement du défenseur.

De plus, de façon avantageuse, l'étape d'interprétation comprend également :
- une sous-étape d'évaluation de la dangerosité de la menace ; et/ou
- une sous-étape d'évaluation de la probabilité de réussite de la solution d'attaque optimale et de la probabilité de réussite de la solution de défense optimale.

Le procédé conforme à l'invention peut être utilisé dans diverses applications dans le domaine militaire.

Dans une application préférée du procédé de prédiction, les données du défenseur sont relatives à un site au sol à protéger pourvu de capacités de défense, et les données du défenseur sont relatives à une attaque aérienne dudit site au sol à protéger et comprenant des données courantes détectées.

Avantageusement, le procédé peut s'appliquer à au moins l'une des situations suivantes, relative à un scénario de conflit militaire :
- une défense anti-aérienne ;
- un combat aérien, défensif ou offensif ;
- une planification de mission pour la frappe d'objectifs.

La présente invention concerne également un dispositif de prédiction d'une solution d'attaque optimale et d'une solution de défense optimale correspondante, dans un scénario de conflit militaire au moins potentiel entre un attaquant et un défenseur.

Selon l'invention, ledit dispositif comporte :
- un ensemble d'entrée de données configuré pour entrer, au moins initialement avant la mise en oeuvre du procédé, à la fois des données de l'attaquant relatives au moins à des modèles d'attaque, et des données du défenseur relatives au moins à une zone à défendre et à des moyens de défense disponibles ;
- une unité de modélisation configurée pour générer un arbre de jeu évalué à partir desdites données entrées dans le cadre de la théorie des jeux ;
- une unité de résolution configurée pour définir un équilibre de jeu dans le cadre de la théorie des jeux, un équilibre définissant un couple de stratégie attaquant et de stratégie défenseur ;
- une unité d'interprétation configurée pour déterminer, à partir de l'équilibre de jeu, une solution d'attaque optimale et une solution de défense optimale, la mieux adaptée à cette solution d'attaque optimale ; et
- une unité de transmission d'informations configurée pour transmettre à un opérateur ou un système utilisateur, au moins ladite solution d'attaque optimale et ladite solution de défense optimale.

Dans un mode de réalisation particulier, l'ensemble d'entrée de données comporte au moins certains des éléments suivants :
- un élément de saisie permettant à un opérateur de saisir des données à entrer ;
- un élément de chargement de données associé à une mémoire et configuré pour charger des données dans ladite mémoire.

En outre, avantageusement, le dispositif comporte au moins un détecteur, par exemple un radar, apte à détecter des données courantes relatives à un moyen d'attaque d'un attaquant, et l'ensemble d'entrée de données comporte une liaison de transmission de données permettant d'entrer de façon automatique des données courantes détectées par le détecteur.

Une application préférée de la présente invention est de prédire la tactique de défense d'un site comprenant des zones à protéger telles que des bâtiments et des moyens de défense faisant partie d'un système d'armes antiaérien et comprenant, par exemple des missiles anti-missiles ou d'autres moyens de défense aérienne, lors d'une attaque aérienne du site par un attaquant.

Les figures du dessin annexé feront bien comprendre comment l'invention peut être réalisée. Sur ces figures, des références identiques désignent des éléments semblables.

La figure 1 est le schéma synoptique d'un dispositif de prédiction conforme à l'invention.

Les figures 2 et 3 sont les schémas synoptiques d'unités de traitement de données du dispositif de prédiction de la figure 1.

La figure 4 montre schématiquement les étapes d'un procédé mis en oeuvre par le dispositif de prédiction de la figure 1.

La figure 5 illustre un scénario d'attaque simplifié.

La figure 6 illustre un arbre de jeu associé au scénario d'attaque simplifié de la figure 5.

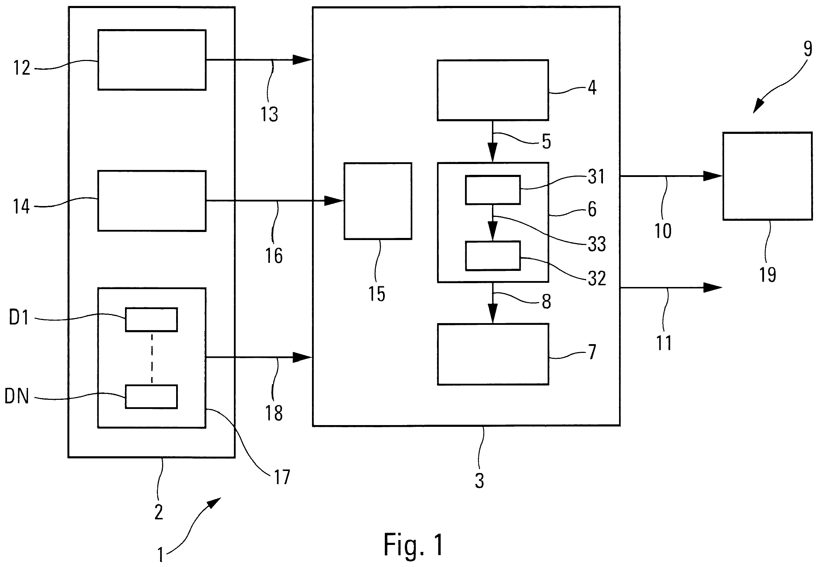

Le dispositif 1 permettant d'illustrer l'invention et représenté schématiquement sur la figure 1 est destiné à prédire au moins une solution d'attaque optimale et une solution de défense optimale correspondante, dans un scénario de conflit militaire (au moins potentiel, à savoir soit effectif, soit envisagé) entre au moins un attaquant et au moins un défenseur.

Selon l'invention, ledit dispositif 1 comporte :
- un ensemble d'entrée de données 2 configuré pour entrer dans ledit dispositif 1, comme précisé ci-dessous, à la fois des données de l'attaquant relatives au moins à des modèles d'attaque (par exemple des trajectoires d'armes d'attaque), et des données du défenseur relatives au moins à une zone à défendre et à des moyens de défense disponibles sur cette zone ;
- une unité centrale 3 comprenant :
   - une unité de modélisation 4 configurée pour générer un arbre de jeu évalué, à l'aide au moins d'une partie des données entrées au moyen de l'ensemble d'entrée de données 2, ledit arbre de jeu étant défini dans le cadre de la théorie des jeux, comme précisé ci-dessous ;
   - une unité de résolution 6 reliée par l'intermédiaire d'une liaison 5 à l'unité de modélisation 4 et configurée pour définir un équilibre de jeu dans le cadre de la théorie des jeux, un équilibre définissant un couple de stratégie attaquant et de stratégie défenseur ;
   - une unité d'interprétation 7 reliée par l'intermédiaire d'une liaison 8 à l'unité de résolution 6 et configurée pour déterminer, à partir de cet équilibre de jeu, une solution d'attaque optimale et une solution de défense optimale (à savoir la mieux adaptée à cette solution d'attaque optimale) ; et
- une unité de transmission d'informations 9 configurée pour transmettre au moins ladite solution d'attaque optimale et ladite solution de défense optimale déterminées par l'unité centrale 3, à un opérateur (par l'intermédiaire par exemple de moyens d'affichage 19 qui sont reliés par une liaison 10 à l'unité centrale 3 et qui affichent ces informations sur un écran) ou à un système utilisateur (par l'intermédiaire par exemple d'une liaison 11).

Dans un mode de réalisation particulier, l'ensemble d'entrée de données 2 comporte :
- un élément de saisie 12 permettant à un opérateur d'entrer des données, notamment manuellement, dans l'unité centrale 3 via une liaison 13. Cet élément de saisie 12 peut comporter un clavier, une souris, un pavé tactile,..., ou tout autre moyen usuel, associé par exemple à un écran, qui permet à un opérateur d'entrer des données dans ledit dispositif 1. Cet élément de saisie 12 peut former avec les moyens d'affichage 19 une interface homme/machine ; et
- un élément de chargement de données 14 associé à une mémoire 15 et configuré pour charger des données dans ladite mémoire 15, via une liaison 16. Cette mémoire 15 peut être intégrée dans l'unité centrale 3, comme dans l'exemple représenté sur la figure 1, ou être externe à l'unité centrale 3 et liée à cette dernière.

En outre, le dispositif 1 comporte également un ensemble 17 de détecteurs D1 à DN, par exemple des radars, N étant un entier supérieur à 1. Ces détecteurs D1 à DN sont aptes à détecter des données courantes relatives à un moyen d'attaque (par exemple un missile) d'un attaquant. Dans ce cas, l'ensemble d'entrée de données 2 comporte une liaison de transmission de données 18 permettant d'entrer de façon automatique dans l'unité centrale 3 des données courantes détectées (ou mesurées ou déterminées) par au moins un détecteur D1 à DN de l'ensemble 17.

L'ensemble 17 comprend au moins un détecteur, tel qu'un radar par exemple, qui surveille l'environnement de la zone à protéger et qui est apte à détecter des menaces et à transmettre des informations correspondantes, notamment la position et la cinématique des menaces.

Les données de l'attaquant, entrées à l'aide de l'ensemble d'entrée de données 2, comportent au moins certaines des données suivantes :
- des modèles d'attaque comprenant notamment les procédures d'attaque les plus probables. Une procédure d'attaque peut correspondre à une séquence d'actions concrètes pour mener une attaque. Une procédure d'attaque particulière peut être notamment une trajectoire d'attaque ;
- des types de menaces et des caractéristiques associées (classification, armement, ...) ;
- au moins une position détectée d'apparition d'une menace ;
- au moins une position supposée d'apparition d'une menace ; et
- des préférences de l'attaquant, telles que le coût d'utilisation de chaque menace (munition) potentielle ou le coût en cas d'interception par le défenseur.

En outre, les données du défenseur, également entrées à l'aide de l'ensemble d'entrée de données 2, comportent au moins certaines des données suivantes :
- des missions possibles (une attaque de cibles et de quelles cibles (bâtiment, ouvrage, ...), ou une mission de reconnaissance par exemple) ;
- des données des détecteurs D1 à DN ou d'autres moyens de détection, et notamment de radars ;
- des caractéristiques des moyens de détection, par exemple la fréquence utilisée par un radar ;
- des positions de cibles potentielles dans la zone à défendre (bâtiments, radars, lanceurs, munitions, ...) ;
- des capacités de défense de la zone à défendre (caractéristiques des lanceurs et les munitions disponibles) ; et
- des préférences du défenseur, telles que le coût de tir de chaque munition ou la hiérarchisation des éléments de la zone à défendre par ordre d'importance.

L'ensemble d'entrée de données 2 est configuré pour entrer la plupart des données avant la mise en oeuvre de la prédiction par l'unité centrale 3. Toutefois, dans un mode de réalisation particulier, notamment dans le cas de la protection d'un site lors d'une attaque aérienne, l'ensemble d'entrée de données 2 peut également entrer des données courantes lors de la mise en oeuvre du procédé de prédiction. Il peut notamment s'agir de données courantes relatives à l'attaquant, détectées par au moins un détecteur D1 à DN de l'ensemble 17, par exemple un radar, telles que la trajectoire courante suivie par un missile, un drone ou un avion de chasse.

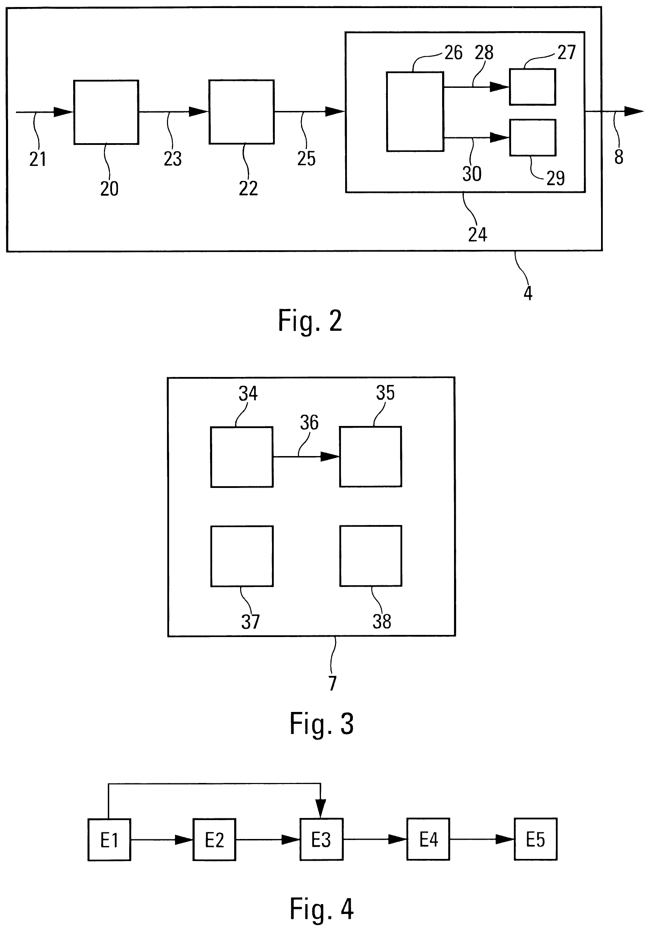

Par ailleurs, l'unité de modélisation 4 comporte, comme représenté sur la figure 2 :
- une sous-unité 20 configurée pour générer un ensemble de stratégies possibles, à l'aide de certaines des données entrées et reçues via une liaison 21. Il peut notamment s'agir d'au moins certaines des données suivantes :
   - les données des moyens de détection ;
   - les caractéristiques des moyens de détection ;
   - les positions d'apparition des menaces ;
   - les missions potentielles et leurs caractéristiques ;
   - les modèles de procédure, notamment de trajectoires, à utiliser ; et
   - les types de menaces et leurs caractéristiques ;
- une sous-unité 22 liée à la sous-unité 21 par l'intermédiaire d'une liaison 23 et configurée pour générer un arbre de jeu dans le cadre de la théorie des jeux, à partir dudit ensemble de stratégies généré par la sous-unité 20, et d'autres données telles que les missions potentielles et les caractéristiques des moyens de détection ; et
- une sous-unité 24 liée à la sous-unité 22 par l'intermédiaire d'une liaison 25 et configurée pour évaluer ledit arbre de jeu, à l'aide de certaines des données entrées, telles que les caractéristiques des lanceurs et des munitions.

La sous-unité 24 comporte, comme représenté sur la figure 2 :
- un élément 26 configuré pour, à partir de couples de stratégies, évaluer au moins un couple de stratégie attaquant et de stratégie défenseur ;
- un élément 27 lié par une liaison 28 à l'élément 26 et contenant une fonction d'utilité pour d'attribuer une valeur à l'attaquant ; et
- un élément 29 lié par une liaison 30 à l'élément 26 et contenant une fonction d'utilité pour d'attribuer une valeur au défenseur.

En outre, l'unité de résolution 6 comprend, comme représenté sur la figure 1 :
- une sous-unité 31 configurée pour élaguer l'arbre de jeu reçu de l'unité de modélisation 4, à partir de données supplémentaires telles que les menaces, ainsi que de données courantes, entrées par un opérateur ou reçues en temps réel de l'ensemble 17 de détecteurs et précisant par exemple les positions courantes de menaces. Par cet élagage (ou réduction), la sous-unité 31 forme un arbre de jeu réduit. La sous-unité 31 peut donc utiliser également des données courantes détectées, entrées lors de la mise en oeuvre du procédé de prédiction, pour élaguer l'arbre de jeu reçu ; et
- une sous-unité 32 liée à la sous-unité 31 par l'intermédiaire d'une liaison 33 et configurée pour déterminer l'équilibre de jeu, à partir de cet arbre de jeu réduit reçu de la sous-unité 31, afin d'en déduire un couple de stratégie attaquant et de stratégie défenseur. L'équilibre de jeu peut correspondre à l'équilibre de Nash ou à un autre équilibre usuel.

Par ailleurs, l'unité d'interprétation 7 comporte, comme représenté sur la figure 3 :
- une sous-unité 34 configurée pour générer la solution d'attaque optimale, à partir de l'équilibre de jeu reçu de l'unité de résolution 6. Cette solution d'attaque optimale définit des missions probabilisées, et des types de menaces et leurs caractéristiques probabilisées ; et
- une sous-unité 35 liée à la sous-unité 34 par l'intermédiaire d'une liaison 36 et configurée pour évaluer la dangerosité de la menace.

De plus, l'unité d'interprétation 7 comprend également :
- une sous-unité 37 configurée pour générer, à partir de l'équilibre de jeu reçu de l'unité de résolution 6, la solution de défense optimale la mieux adaptée à ladite solution d'attaque optimale, permettant de définir des règles d'engagement du défenseur ; et
- une sous-unité 38 pour évaluer la probabilité de réussite de ladite solution d'attaque optimale et la probabilité de réussite de ladite solution de défense optimale.

La prédiction de ces solutions (d'attaque et de défense) optimales dans le scénario de conflit se base donc sur la résolution d'un problème de théorie des jeux.

La théorie des jeux peut être définie comme le cadre théorique modélisant les situations dans lesquelles l'action optimale (c'est-à-dire préférée) pour un agent dépend des anticipations qu'il forme sur la décision de l'autre agent. Ces deux agents sont l'attaquant et le défenseur dans le cadre de la présente invention.

En théorie des jeux, un équilibre de jeu tel qu'un équilibre de Nash est une situation dans un jeu où aucun joueur n'a intérêt à changer de stratégie. Dans cette situation l'ensemble des choix faits par plusieurs joueurs, connaissant leurs stratégies réciproques, est devenu stable en raison du fait qu'aucun ne peut modifier seul sa stratégie sans affaiblir sa position personnelle

La théorie des jeux est une théorie de la décision en interaction. Elle étudie des situations ou des individus prennent des décisions, chacun étant conscient que le résultat de son propre choix dépend de celui des autres.

Une application préférée du dispositif 1, tel que décrit ci-dessus, a pour but de définir la meilleure stratégie de défense possible d'un site à protéger, c'est-à-dire la solution de défense optimale, lors d'une attaque aérienne de ce site et notamment après la détection du lancement d'une menace potentielle, telle que la détection par un radar d'un tir de missile susceptible d'atteindre le site ou d'une approche d'un drone, d'un avion de chasse ou d'un bombardier.

Confronté à une telle attaque, le centre de commandement du site à protéger se trouve donc en face d'un problème technique, à savoir lequel ou lesquels de ses moyens de défense, tels qu'un missile anti-missile, utiliser contre le missile qui les attaque. Ce problème technique a pour but de défendre au moins les cibles potentielles du site, en fonction de ses moyens de défense et de ce que l'on sait de l'attaque : attaque isolée et dirigée vers quelle cible, autre attaque possible, simple mission de reconnaissance par exemple en cas de détection d'un avion ennemi. Cette prédiction doit également tenir compte des coûts éventuels : coût des munitions utilisées, coût de destruction potentielle,... Le dispositif 1 permet de recevoir les données à traiter, aussi bien avant la mise en oeuvre du procédé de prédiction que durant cette mise en oeuvre.

Pour déterminer la solution de défense optimale, un opérateur entre donc préalablement dans le dispositif 1 (à l'aide de l'ensemble d'entrée de données 2) toutes les données connues relatives à l'attaquant ou aux attaquants potentiels et les données relatives au défenseur (c'est-à-dire relatives notamment aux caractéristiques du site à protéger et aux systèmes d'armes présents et aptes à être utilisés pour protéger le site). Des données courantes concernant des détections en temps réel, telles qu'un nouveau tir de missile, ou une position mise à jour du missile détecté précédemment, peuvent également être entrées (à l'aide de l'ensemble d'entrée de données 2) dès qu'elles sont connues. Le dispositif de prédiction 1 détermine dans cette application préférée une solution de défense optimale consistant à définir une proposition d'engagement.

Une proposition d'engagement peut comprendre un plan d'allocation optimal qui précise une allocation des armes du site à défendre et prévoit des instants ou dates de tir de ces armes pour détruire les menaces, dans le but d'allouer au mieux les ressources disponibles pour traiter les menaces en maximisant l'espérance de survie des points stratégiques défendus.

Le dispositif 1, tel que décrit ci-dessus, est destiné à mettre en oeuvre un procédé de prédiction d'une solution d'attaque optimale et d'une solution de défense optimale correspondante, dans un scénario de conflit militaire au moins potentiel entre un attaquant et un défenseur.

Comme représenté sur la figure 4, ce procédé de prédiction comprend :
- une étape E1 d'entrée de données, mise en oeuvre par l'ensemble d'entrée de données 2, consistant à entrer dans l'unité centrale 3 du dispositif 1, au moins initialement avant la mise en oeuvre du procédé et éventuellement au cours du procédé, à la fois des données de l'attaquant relatives au moins à des modèles d'attaque, et des données du défenseur relatives au moins à une zone à défendre et à des moyens de défense disponibles ;
- une étape E2 de modélisation de scénario, mise en oeuvre par l'unité de modélisation 4, consistant à générer un arbre de jeu évalué à partir desdites données entrées dans le cadre de la théorie des jeux ;
- une étape E3 de résolution, mise en oeuvre par l'unité résolution 6, consistant à définir un équilibre de jeu dans le cadre de la théorie des jeux, par exemple à l'aide de données courantes entrées ;
- une étape E4 d'interprétation, mise en oeuvre par l'unité d'interprétation 7, consistant à déterminer, à partir de l'équilibre de jeu défini à l'étape E3, au moins une solution d'attaque optimale, ainsi qu'une solution de défense optimale, la mieux adaptée à cette solution d'attaque optimale ; et
- une étape E5 de transmission d'informations, mise en oeuvre par l'unité de transmission d'informations 9, consistant à transmettre à un opérateur et/ou à un système utilisateur, au moins ladite solution d'attaque optimale et ladite solution de défense optimale.

Le procédé conforme à l'invention permet ainsi de prédire une solution de défense optimale si on se place du côté du défenseur, et une solution d'attaque optimale si on se place du côté de l'attaquant.

Dans le cadre de la présente invention, les décideurs (attaquant et défenseur) sont supposés VNM-rationnels (pour « Von-Neumann et Morgenstern »). On se place ainsi dans le cadre de la théorie de l'utilité espérée où l'on sait exprimer les préférences d'un décideur en présence d'événements aléatoires. On sait définir une fonction (dite d'utilité) qui, à une alternative pour le décideur, associe un nombre réel et donne par ce biais des niveaux de préférence entre les différentes alternatives. Les objectifs de l'attaquant et du défenseur sont donc de maximiser leurs fonctions d'utilité respectives.

Le problème est alors modélisé comme un jeu séquentiel (les décisions s'enchaînent séquentiellement) à deux joueurs, l'attaquant (les menaces sont représentées comme un seul joueur qui correspond à l'échelon de décision/planification de la tactique d'attaque utilisée) et le défenseur (un système C2 par exemple). Le jeu est modélisé comme :
- bayésien : les joueurs ne connaissent pas tous les paramètres du jeu auquel ils jouent. En particulier, le défenseur ne connaît pas les missions des attaquants, et les attaquants ne connaissent pas forcément la configuration du système de défense ;
- à information imparfaite : le défenseur n'a pas l'information des décisions prises par l'attaquant pendant la préparation de mission ;
- à mémoire parfaite : les joueurs ont l'historique de leurs décisions passées ; et
- à rationalité illimitée : les joueurs ne sont pas limités en termes de complexité de calcul. Les décisions de l'attaquant ne sont pas influencées par des informations reçues pendant l'attaque, c'est-à-dire que l'attaque est considérée comme planifiée à l'avance durant la préparation de mission et ne change plus.

On cherche une solution de jeu, c'est-à-dire un couple de stratégies probabilisées pour chaque joueur. Le jeu est résolu en particulier en calculant un équilibre de type « semi-proper quasi-perfect equilibrium » qui est un raffinement de l'équilibre de Nash adapté à la modélisation.

On peut extraire de la stratégie de l'attaquant des procédures, par exemple des trajectoires, d'attaques possibles, ainsi que des missions et classifications de menaces plausibles. La solution du jeu trouvée permet également d'obtenir une ou plusieurs stratégies de défense potentielles pour le système C2, c'est-à-dire une ou plusieurs solutions de tir adaptées au scenario d'attaque.

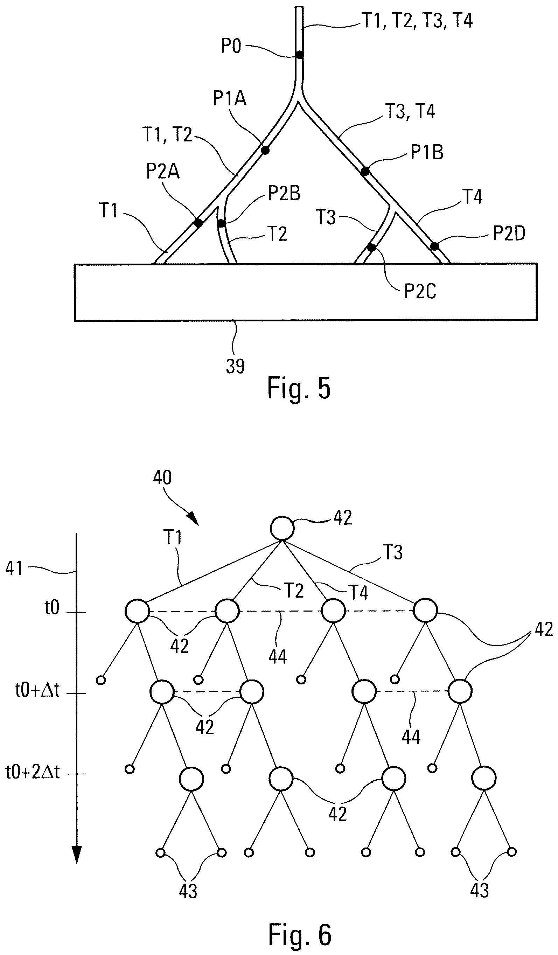

A titre d'illustration, on a représenté sur la figure 5, une représentation graphique possible et très simplifiée d'un jeu tel qu'il peut être pris en compte par le dispositif 1, comprenant les hypothèses suivantes.

On suppose que l'attaquant a le choix entre différentes trajectoires. Ces trajectoires sont discrétisées. De nombreuses autres caractéristiques potentielles de l'attaque peuvent également être représentées : le choix de la mission (bâtiment cible, mission de reconnaissance,...) ou la classification des menaces (drone, avion de chasse,...) en sont des exemples non exhaustifs. Les actions du défenseur sont également discrétisées. A intervalles de temps réguliers, le défenseur reçoit des mesures des détecteurs, par exemple de l'ensemble 17 du dispositif 1. Il a alors la possibilité d'engager un attaquant en déclenchant un tir avant la réception d'une nouvelle mesure ou il a la possibilité d'attendre.

Dans l'exemple de la figure 5, on considère qu'il y a une seule piste (c'est-à-dire un seul attaquant), un seul lanceur (une seule décision de tir possible, mais à plusieurs dates possibles) et un seul objectif (ou cible) 39.

Quant aux trajectoires T1, T2, T3 et T4, elles sont considérées comme possibles pour l'attaquant pour atteindre l'objectif 39. Sur la figure 5, on a représenté :
- une position P0 à un temps *t*0, ne permettant pas de discriminer les trajectoires T1 à T4 ;
- deux positions P1A et P1B à un temps *t*0+Δ*t* permettant de discriminer d'une part le couple de trajectoires T1 et T2 et d'autre part le couple de trajectoires T3 et T4 ; et
- quatre positions P1A, P1B, P2C et P2D à un temps *t*0+2Δ*t* à l'approche de l'objectif (ou cible) 39, faisant partie respectivement des trajectoires T1, T2, T3 et T4.

Le jeu associé à ce scénario de la figure 5 est représenté sous forme d'un arbre de jeu 40 sur la figure 6, auquel on a associé une échelle de temps 41.

Sur cet arbre de jeu 40, les grands cercles 42 représentent les noeuds de décision de l'attaquant et du défenseur. Les petits cercles 43 représentent les noeuds terminaux. L'attaquant a le choix entre quatre trajectoires T1, T2, T3 et T4. Le défenseur n'a pas l'information de ces trajectoires mais reçoit les mesures des détecteurs, ce qui lui permet de conjecturer ces trajectoires. Il prend la décision de tirer ou non à chaque réception de mesure(s) d'un détecteur.

Les traits pointillés horizontaux 44 indiquent que les noeuds de décision reliés ne peuvent pas être distingués par le défenseur. A *t*0, il ne sait pas quelle est la trajectoire de l'attaquant. Donc, de son point de vue, la décision est la même pour les quatre noeuds. Il ne dispose pas d'Information permettant de les distinguer.

A *t*0+Δ*t*, après réception d'une mesure, le défenseur est capable de faire un premier tri sur les trajectoires possibles (entre T1 et T2 d'une part, et T3 et T4 d'autre part).

Au niveau des noeuds terminaux, les joueurs ont pris toutes leurs décisions, et on peut donc calculer les fonctions d'utilité de l'attaquant et du défenseur.

Le procédé mis en oeuvre par le dispositif 1 tient compte de nombreux éléments pour prédire la solution d'attaque optimale de l'attaquant, et en déduire la solution de défense optimale la plus adaptée. Au-delà des trajectoires des menaces, il évalue également leurs caractéristiques.

L'application de la théorie des jeux au problème de défense d'un système C2 permet de prendre en compte toutes les informations dont dispose la défense. En particulier, la connaissance de l'opérateur est intégrée dans les procédures, notamment les trajectoires, étudiées pour modéliser l'attaque et dans les probabilités associées à ces procédures ou trajectoires en amont de la résolution du jeu (croyance a priori). La prédiction est ainsi affinée en considérant l'expertise de l'opérateur sur la mission et la classification de la menace, puisque le procédé de prédiction rend possible la distinction des cibles potentielles de l'attaque selon leur importance. Il donne également la possibilité à l'opérateur de renseigner les caractéristiques probables de la menace considérée. Il permet également à l'opérateur d'entrer les informations dont il pourrait avoir connaissance par ailleurs et qui lui permettent de privilégier certaines hypothèses.

L'intégration de cette connaissance aux algorithmes utilisés par l'unité centrale 3 permet une très bonne interaction de l'opérateur avec le dispositif 1.

Le procédé de prédiction permet de représenter des stratégies d'attaque pour mieux les exploiter. Il peut gérer des scénarios d'attaque d'une zone par plusieurs menaces simultanées, au lieu de considérer chaque menace individuellement. En partant du principe qu'un unique centre de commandement a ordonné l'attaque, les procédures (trajectoires par exemple) des menaces ne sont pas indépendantes, et ont été choisies volontairement. Les attaques de ces menaces sont coordonnées entre elles. Cette approche prédit les procédures (trajectoires par exemple) de ces menaces simultanément, en prenant en compte cette dépendance.

Le procédé de prédiction exploite également la notion de position d'apparition (c'est-à-dire de la position à laquelle chaque menace est détectée la première fois). Au cours d'une attaque, la position d'apparition d'une menace n'est pas anodine. L'unité centrale 3 interprète le fait que l'attaquant ait choisi une position plutôt qu'une autre, ce qui rend la prédiction plus réaliste, puisque ce choix donne des informations sur l'objectif de l'attaquant.

Le procédé de prédiction permet non seulement de prédire la trajectoire d'une menace, mais il associe également des probabilités à d'autres éléments. Pour représenter au mieux le problème, les différentes missions possibles et les classifications de menaces potentielles sont finement modélisées. En les associant aux informations à disposition du défenseur, le dispositif 1 déduit la trajectoire future d'une menace, et évalue également la cible de l'attaque, ainsi que les caractéristiques de la menace telles que sa nature et son armement.

Le dispositif 1 et le procédé de prédiction, tels que décrits ci-dessus, sont mis en oeuvre de préférence pour protéger une zone d'une attaque aérienne comme indiqué ci-dessus, mais ils peuvent être étendus à une aide au déploiement. On peut en effet comparer l'efficacité de deux déploiements face à un type d'attaque aérienne en comparant les valeurs obtenues pour l'utilité du défenseur dans chaque déploiement.

En outre, ce dispositif 1 et ce procédé peuvent être utilisés comme une aide à la planification de mission. Il suffit, dans ce cas, de se placer du point de vue de l'attaquant, en mettant en oeuvre les opérations précitées, et de prendre en compte les données connues ou supposées dont dispose l'attaquant sur les deux protagonistes.

Tout en déterminant les meilleures solutions d'attaque de l'adversaire, le dispositif 1 calcule la ou les meilleures solutions de défense, sous forme d'une séquence de décisions. Les propriétés de l'équilibre font que les solutions d'attaque et de défense ainsi calculées sont les meilleures possibles pour les deux acteurs. Cette approche peut se généraliser à de nombreux systèmes d'aide à la décision dans le domaine militaire, en particulier les systèmes de planification et de conduite de missions utilisés dans les systèmes d'armes ou même dans les états-majors, ou les systèmes de préparation d'opérations militaires, à l'échelon tactique ou même stratégique.

## Revendications

1. Dispositif de prédiction d'une solution d'attaque optimale et d'une solution de défense optimale correspondante, dans un scénario de conflit militaire au moins potentiel entre un attaquant et un défenseur,
**caractérisé en ce qu'**il comporte :
- un ensemble d'entrée de données (2) configuré pour entrer dans ledit dispositif (1), à la fois des données de l'attaquant et des données du défenseur, les données du défenseur étant relatives à un site au sol à protéger pourvu de capacités de défense, et les données de l'attaquant étant relatives à une attaque aérienne dudit site au sol à protéger et comprenant des données courantes détectées, les données de l'attaquant comportant au moins certaines des données suivantes :
• des modèles de procédures d'attaque ;
• des types de menaces et des caractéristiques associées ;
• au moins une position détectée d'apparition d'une menace ;
• au moins une position supposée d'apparition d'une menace ; et
• des préférences de l'attaquant,
et les données du défenseur comportant au moins certaines des données suivantes :
• des missions possibles ;
• des données de moyens de détection ;
• des caractéristiques de moyens de détection ;
• des positions de cibles potentielles dans la zone à défendre ;
• des capacités de défense de la zone à défendre ; et
• des préférences du défenseur ;
- une unité centrale (3) comportant :
• une unité de modélisation (4) configurée pour générer un arbre de jeu évalué, à partir desdites données entrées, dans le cadre de la théorie des jeux ;
• une unité de résolution (6) configurée pour définir un équilibre de jeu dans le cadre de la théorie des jeux, un équilibre définissant un couple de stratégie attaquant et de stratégie défenseur ;
• une unité d'interprétation (7) configurée pour déterminer, à partir de l'équilibre de jeu, une solution d'attaque optimale et une solution de défense optimale, la mieux adaptée à cette solution d'attaque optimale ; et
- une unité de transmission d'informations (9) configurée pour transmettre à un opérateur ou un système utilisateur, au moins ladite solution d'attaque optimale et ladite solution de défense optimale.

2. Dispositif selon la revendication 1,
**caractérisé en ce que** l'ensemble d'entrée de données (2) comporte au moins certains des éléments suivants :
- un élément de saisie (12) permettant à un opérateur de saisir des données à entrer ;
- un élément de chargement de données (14) associé à une mémoire (15) et configuré pour charger des données dans ladite mémoire (15).

3. Dispositif selon l'une des revendications 1 et 2,
**caractérisé en ce qu'**il comporte au moins un détecteur (D1, DN) apte à détecter des données courantes relatives à un moyen d'attaque d'un attaquant, et **en ce que** l'ensemble d'entrée de données (2) comporte une liaison de transmission de données (18) permettant d'entrer de façon automatique des données courantes détectées par le détecteur (D1, DN).

4. Dispositif selon l'une quelconque des revendications 1 à 3, **caractérisé en ce que** l'unité de transmission d'informations (9) comporte :
- des moyens d'affichage (19) qui sont reliés par l'intermédiaire d'une liaison (10) à l'unité centrale (3) ; ou
- une liaison (11) pour transmettre, au moins ladite solution d'attaque optimale et ladite solution de défense optimale, à un système utilisateur.

5. Dispositif selon l'une quelconque des revendications 1 à 4, **caractérisé en ce que** la solution de défense optimale consiste à définir une proposition d'engagement comprenant un plan d'allocation optimal qui précise une allocation d'armes du site à défendre et prévoit des dates de tir de ces armes pour détruire les menaces, dans le but d'allouer au mieux les ressources disponibles pour traiter les menaces en maximisant l'espérance de survie de points stratégiques défendus.

6. Procédé de prédiction d'une solution d'attaque optimale et d'une solution de défense optimale correspondante, dans un scénario de conflit militaire au moins potentiel entre un attaquant et un défenseur,
**caractérisé en ce qu'**il comprend :
- une étape (E1) d'entrée de données, mise en oeuvre par un ensemble d'entrée de données (2), consistant à entrer, au moins initialement avant la mise en oeuvre du procédé, à la fois des données de l'attaquant et des données du défenseur, les données du défenseur étant relatives à un site au sol à protéger pourvu de capacités de défense, et les données de l'attaquant étant relatives à une attaque aérienne dudit site au sol à protéger et comprenant des données courantes détectées, les données de l'attaquant comportant au moins certaines des données suivantes :
• des modèles de procédures d'attaque ;
• des types de menaces et des caractéristiques associées ;
• au moins une position détectée d'apparition d'une menace ;
• au moins une position supposée d'apparition d'une menace ; et
• des préférences de l'attaquant,
et les données du défenseur comportant au moins certaines des données suivantes :
• des missions possibles ;
• des données de moyens de détection ;
• des caractéristiques de moyens de détection ;
• des positions de cibles potentielles dans la zone à défendre ;
• des capacités de défense de la zone à défendre ; et
• des préférences du défenseur ;
- une étape (E2) de modélisation de scénario, mise en oeuvre par une unité de modélisation (4), consistant à générer un arbre de jeu évalué à partir desdites données entrées dans le cadre de la théorie des jeux ;
- une étape (E3) de résolution, mise en oeuvre par une unité de résolution (6), consistant à définir un équilibre de jeu dans le cadre de la théorie des jeux, un équilibre définissant un couple de stratégie attaquant et de stratégie défenseur ;
- une étape (E4) d'interprétation, mise en oeuvre par une unité d'interprétation (7), consistant à déterminer, à partir de l'équilibre de jeu, une solution d'attaque optimale et une solution de défense optimale, la mieux adaptée à cette solution d'attaque optimale ; et
- une étape (E5) de transmission d'informations, mise en oeuvre par une unité de transmission d'informations (9), consistant à transmettre à un opérateur ou un système utilisateur, au moins ladite solution d'attaque optimale et ladite solution de défense optimale.

7. Procédé selon la revendication 6,
**caractérisé en ce qu'**il s'applique à au moins l'une des situations suivantes, relative à un scénario de conflit militaire :
- une défense anti-aérienne ;
- un combat aérien, défensif ou offensif ;
- une planification de mission pour la frappe d'objectifs.

8. Procédé selon l'une des revendications 6 et 7,
**caractérisé en ce que** la solution de défense optimale consiste à définir une proposition d'engagement comprenant un plan d'allocation optimal qui précise une allocation d'armes du site à défendre et prévoit des dates de tir de ces armes pour détruire les menaces, dans le but d'allouer au mieux les ressources disponibles pour traiter les menaces en maximisant l'espérance de survie de points stratégiques défendus.

9. Procédé selon l'une quelconque des revendications 6 à 8, **caractérisé en ce que** l'étape (E4) d'entrée de données consiste également à entrer des données courantes détectées, au moins de l'attaquant, lors de la mise en oeuvre du procédé.

10. Procédé selon l'une quelconque des revendications 6 à 9, **caractérisé en ce que** l'étape (E2) de modélisation comporte :
- une première sous-étape consistant à générer un ensemble de stratégies possibles à l'aide de certaines des données entrées ;
- une deuxième sous-étape consistant à générer un arbre de jeu dans le cadre de la théorie des jeux, à partir dudit ensemble de stratégies ;
- une troisième sous-étape consistant à évaluer ledit arbre de jeu, à l'aide de données de certaines des données entrées.

11. Procédé selon la revendication 10,
**caractérisé en ce que** la troisième sous-étape consiste, à partir de couples de stratégies, à évaluer au moins un couple de stratégie attaquant et de stratégie défenseur, et à attribuer une valeur à l'attaquant et une valeur au défenseur.

12. Procédé selon l'une quelconque des revendications 6 à 11, **caractérisé en ce que** l'étape (E3) de résolution comprend :
- une première sous-étape consistant à élaguer l'arbre de jeu reçu, à partir de données relatives à des menaces, de manière à former un arbre de jeu réduit ; et
- une seconde sous-étape consistant à déterminer l'équilibre de jeu, à partir de cet arbre de jeu réduit, pour en déduire un couple de stratégie attaquant et de stratégie défenseur.

13. Procédé selon la revendication 12,
**caractérisé en ce que** la première sous-étape utilise également des données courantes détectées, entrées lors de la mise en oeuvre du procédé, pour élaguer l'arbre de jeu reçu.

14. Procédé selon l'une quelconque des revendications 6 à 13, **caractérisé en ce que** l'étape (E4) d'interprétation comprend :
- une première sous-étape consistant à interpréter la solution d'attaque optimale ; et
- une deuxième sous-étape consistant à interpréter la solution de défense optimale la mieux adaptée à cette solution de d'attaque optimale permettant de définir des règles d'engagement du défenseur.

15. Procédé selon la revendication 14,
**caractérisé en ce que** l'étape (E4) d'interprétation comprend également une sous-étape d'évaluation de la dangerosité de la menace.

16. Procédé selon l'une des revendications 14 et 15,
**caractérisé en ce que** l'étape (E4) d'interprétation comprend également une sous-étape d'évaluation de la probabilité de réussite de la solution d'attaque optimale et de la probabilité de réussite de la solution de défense optimale.
